Europäisches Patentamt

European Patent Office

Office européen des brevets

(11) Veröffentlichungsnummer: **0 254 846 B1**

# EUROPÄISCHE PATENTSCHRIFT

(45) Veröffentlichungstag der Patentschrift: 23.10.91

(51) Int. Cl.⁵: **H04L 27/18**, H04B 3/54

(21) Anmeldenummer: 87108264.0

(22) Anmeldetag: 08.06.87

(54) **Verfahren und Vorrichtung zur Uebertragung von Daten.**

(30) Priorität: 23.07.86 CH 2948/86

(43) Veröffentlichungstag der Anmeldung:
03.02.88 Patentblatt 88/05

(45) Bekanntmachung des Hinweises auf die
Patenterteilung:
23.10.91 Patentblatt 91/43

(84) Benannte Vertragsstaaten:
**CH DE GB IT LI SE**

(56) Entgegenhaltungen:

**IEEE GLOBAL TELECOMMUNICATIONS CON-
FERENCE (GLOBECOM), San Diego, 28. November - 1. Dezember 1983, Band 1, Seiten
478-482, IEEE, New York, US; K.W. WHANG et
al.: "The power distribution system as a
communication medium for load management and distribution automation"**

**IEEE NATIONAL TELECOMMUNICATIONS
CONFERENCE, Dallas, 29. November - 1. Dezember 1976, Band 1, Seiten 2.2.1-2.2.3, IEEE,
New York, US; G. LOKKEN et al.: "The proposed Wisconsin electric power company load
management system using power line carrier over distribution lines"**

(73) Patentinhaber: **BBC Brown Boveri Aktiengesellschaft**

**CH-5401 Baden(CH)**

(72) Erfinder: **Braun, Walter, Dr.**
**Zentralstrasse 37**
**CH-5430 Wettingen(CH)**
Erfinder: **Hagmann, Walter, Dr.**
**Pilgerstrasse 22**
**CH-5405 Dättwil(CH)**

EP 0 254 846 B1

## Beschreibung

### Techniches Gebiet

Die Erfindung bezieht sich auf ein Verfahren zur Uebertragung von Daten, die als Folge von Symbolen mit einer bestimmten Symboldauer vorliegen, bei welchem Verfahren die Symbole einer Trägerfrequenz mittels Phasenumtastung aufmoduliert, übertragen und empfängerseitig detektiert werden und die Phasenumtastung differentiell erfolgt (DPSK = Differential Phase Shift Keying).

### Stand der Technik

In manchen Uebertragungskanälen, zum Beispiel in den Hoch- oder Mittelspannungsnetzen mit niedrigen Netzfrequenzen (50 oder 60 Hz), bestehen die wesentlichen Störungen aus den verschiedenen Harmonischen der Netz-Grundfrequenz. Eine Datenübertragung über derartige Verteilnetze muss daher besonders diese harmonisch zusammenhängenden Störungen berücksichtigen.

Es sind nun verschiedene Vorschläge gemacht worden, solche harmonischen Störungen bei der Datenübertragung zu unterdrücken. So ist zum Beispiel aus dem Artikel von J.T. Tengdin, "Field tests show AMRAC IV plc communication is promising", Modern Power Systems, Juni 85, S. 57 ff., ein Uebertragungsverfahren bekannt, bei dem die Daten mittels Phasentastung einer Trägerfrequenz übertragen werden, die genau in der Mitte zwischen zwei benachbarten Harmonischen der Grundfrequenz liegt.

Das Leistungsspektrum dieser phasengetasteten Schwingung gehorcht einer $(\sin x/x)^2$-Funktion symmetrisch zur Trägerfrequenz. Wird nun die Symboldauer der zur Phasentastung verwendeten Datensymbole gleich der doppelten Periodendauer der Störungs-Grundfrequenz gewählt, liegen die Harmonischen dieser Grundfrequenz genau in den Nullstellen des Signal-Leistungsspektrums und können so, ohne Beeinträchtigung des Nutzsignals, durch ein geeignetes Filter empfängerseitig unterdrückt werden.

Ein Verfahren der eingangs genannten Art ist z.B. aus der Veröffentlichung "The power distribution system as a communication medium for load management and distribution automation", K.W. Whang et al., IEEE GLOBAL TELECOMMUNICATIONS CONFERENCE (GLOBECOM), San Diego, 28. Nov. - 1. Dez. 1983, Bd. 1 pp. 478-482, bekannt. In diesem bekannten System wird die DPSK Modulation zusammen mit einer matched-filter Detektion verwendet, um die harmonischen Störungen bei der netzgebundenen Uebertragung zu unterdrücken. Der Kernpunkt besteht darin, das Signalspektrum so zu wählen, dass die Harmonischen der 60 Hz Grundfrequenz alle in eine Nullstelle des Empfängers zu liegen kommen. Damit lässt sich eine Datenrate von typischerweise 20 Baud realisieren.

Das bekannte Uebertragungsverfahren ist jedoch wegen der speziellen Wahl der Symboldauer im Bezug auf die nicht frei wählbare Störungs-Grundfrequenz in seiner Datenrate auf den vergleichsweise geringen Wert von der halben Grundfrequenz beschränkt. Bei einer Netzfrequenz von 50 bzw. 60 Hz entspricht dies einer Datenrate von 25 bzw. 30 Baud.

### Darstellung der Erfindung

Es ist nun die Aufgabe der vorliegenden Erfindung, ein Verfahren zur Uebertragung von Daten zu schaffen, das bei gleicher Unempfindlichkeit gegenüber Störungen, welche als Harmonische einer Grundfrequenz auftreten, eine wesentlich höhere Datenrate ermöglicht.

Die Aufgabe wird bei einem Verfahren der eingangs genannten Art dadurch gelöst, dass
- als Trägerfrequenz eine Frequenz verwendet wird, welche gleich einer Harmonischen der Grundfrequenz ist,
- die Symboldauer so gewählt wird, dass die Periode der Grundfrequenz das N-fache der Symboldauer beträgt (N = 1, 2, 3, ...), und
- empfängerseitig die Differenz von jeweils zwei um N Symbolintervalle auseinanderliegenden Symbolen gebildet wird.

Der Kern der Erfindung besteht also darin, die Periodizität der Störungen, die gleich der Periodizität der Grundschwingung ist, auszunutzen, um durch Differenzbildung von Abtastwerten, welche genau um eine solche Periode voneinander getrennt sind, die Störungen zu eliminieren, ohne die Nutzinformation zu verlieren.

Da bei dem erfindungsgemässen Verfahren die mögliche Datenrate proportional zu N ist und N frei gewählt werden kann, lassen sich bei gleichzeitiger Unterdrückung der harmonischen Störungen sehr hohe Datenraten realisieren.

Weitere Ausgestaltungen der Erfindung ergeben sich aus den Unteransprüchen.

2

Kurze Beschreibung der Zeichnungen

Nachfolgend wird die Erfindung anhand von Ausführungsbeispielen im Zusammenhang mit der Zeichnung näher erläutert. Es zeigen:

Fig. 1A   die spektrale Leistungsverteilung eines phasengetasteten Signals;

Fig. 1B   die Positionierung einer Verteilung gemäss Fig. 1A in einem Spektrum aus harmonischen Störfrequenzen nach dem Stand der Technik;

Fig. 2   die Positionierung einer Verteilung gemäss Fig. 1A in einem Spektrum aus harmonischen Störfrequenzen gemäss einem Ausführungsbeispiel der Erfindung mit N = 1;

Fig. 3   die Vektordarstellung eines gestörten phasengetasteten Signals mit dem Nutzsignalvektor $\underline{a_s}$ und dem Störsignalvektor $\underline{a_i}$;

Fig. 4   die zeitliche Relation zwischen dem Basisbandsignal B(t) und dem Störsignal S(t) bei dem erfindungsgemässen Uebertragungsverfahren in seiner allgemeinen Form;

Fig. 5A   das Blockschaltbild eines senderseitigen Kodierers für die Durchführung des erfindungsgemässen Verfahrens; und

Fig. 5B   das Blockschaltbild eines empfängerseitigen Detektors für die Durchführung des erfindungsgemässen Verfahrens.

Wege zur Ausführung der Erfindung

Im Folgenden soll die Erfindung des besseren Verständnisses wegen zunächst in einem speziellen Ausführungsbeispiel dem Stand der Technik gegenübergestellt werden, bevor sie dann in ihrer allgemeinen Form beschrieben wird.

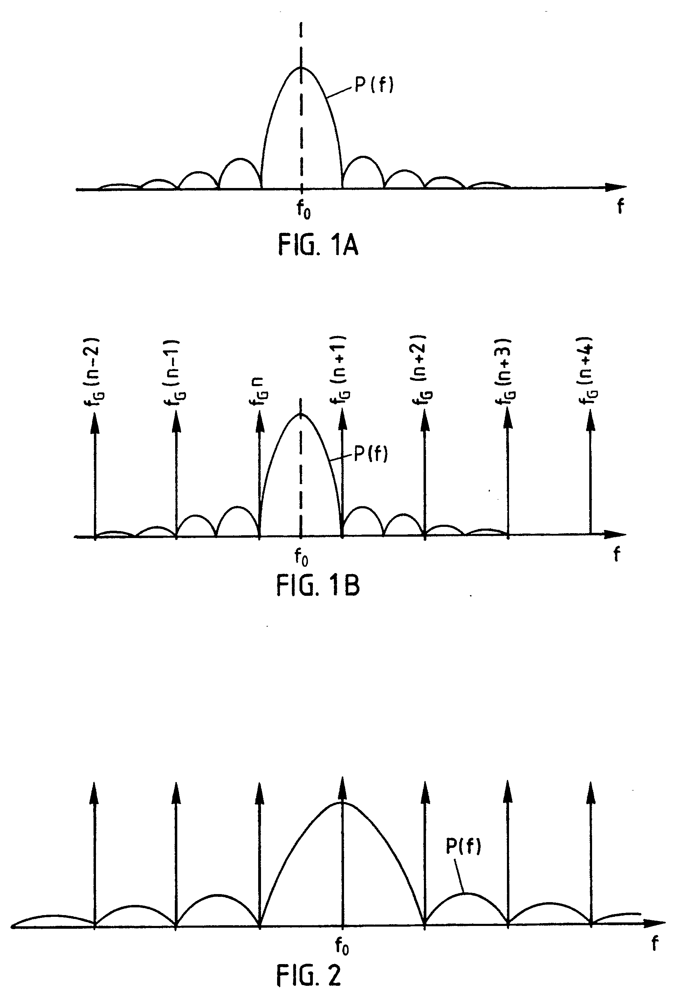

Die harte Phasentastung einer Trägerschwingung mit der Trägerfrequenz $f_o$ durch eine Folge binärer Daten gibt eine spektrale Leistungsverteilung P(f) über der Frequenz f, die in Fig. 1A wiedergegeben ist und der Beziehung

(1)      $P(f) \sim |\sin\pi(f - f_o)T \,/\pi(f - f_o)T\,|^2$

gehorcht (T ist die Symboldauer der Symbole, deren Folge die Daten darstellt).

Die spektrale Leistungsverteilung P(f) hat wegen der Periodizität der sin-Funktion in (1) auf beiden Seiten der Trägerfrequenz $f_o$ in ihrem Spektrum äquidistante Nullstellen.

Diese Charakteristik ist im Stand der Technik ausgenutzt worden, um Störungen, die Harmonische einer gemeinsamen Grundfrequenz $f_G$ sind, wirkungsvoll zu unterdrücken, ohne dabei die Informationsübertragung selbst zu beeinträchtigen.

Dazu wird bei einem vorgegebenen, diskreten Spektrum der form n $\cdot$ $f_G$ (n = 1, 2, 3, ...), wie in Fig. 1B dargestellt und aus dem eingangs zitierten Artikel bekannt, die Trägerfrequenz $f_o$ genau in die Mitte zwischen zwei benachbarten Harmonischen (in Fig. 1B z.B. n$\cdot$ $f_G$ und (n + 1)$f_G$) gelegt und die Symboldauer T so gewählt, dass sie der doppelten Periodendauer der Grundfrequenz $f_G$ entspricht.

Unter diesen Bedingungen liegen die harmonischen Oberschwingungen n$\cdot f_G$ der Grundfrequenz $f_G$ genau in den Nullstellen der spektralen Leistungsverteilung P(f) und können empfängerseitig durch ein Filter mit einer sinx/x-Charakteristik unterdrückt werden, ohne die Datenübertragung zu beeinträchtigen.

Wie bereits erwähnt, ist bei diesem bekannten Verfahren die Datenrate durch die Wahl der Bedingungen auf einen Wert von $f_G/2$ beschränkt. Im Falle der Datenübertragung über Verteilnetze mit einer Störungsgrundfrequenz $f_G$ von 50 bzw. 60 Hz ergeben sich damit Raten von nur 25 bzw. 30 Baud.

Bei der phasengetasteten Datenübertragung wird nun häufig die DPSK-Modulation (Differential Phase Shift Keying) verwendet, bei der die zu übertragende Information in der Phasenänderung zwischen zwei benachbarten Zuständen enthalten ist, und welche Synchronisationsprobleme zwischen Sender- und Empfängerseite vermeidet.

Unter Verwendung der speziellen Eigenschaften der DPSK-Modulation kann gemäss einem speziellen Ausführungsbeispiel der Erfindung die mit der Uebertragung erreichbare Datenrate gegenüber dem Stand der Technik verdoppelt werden.

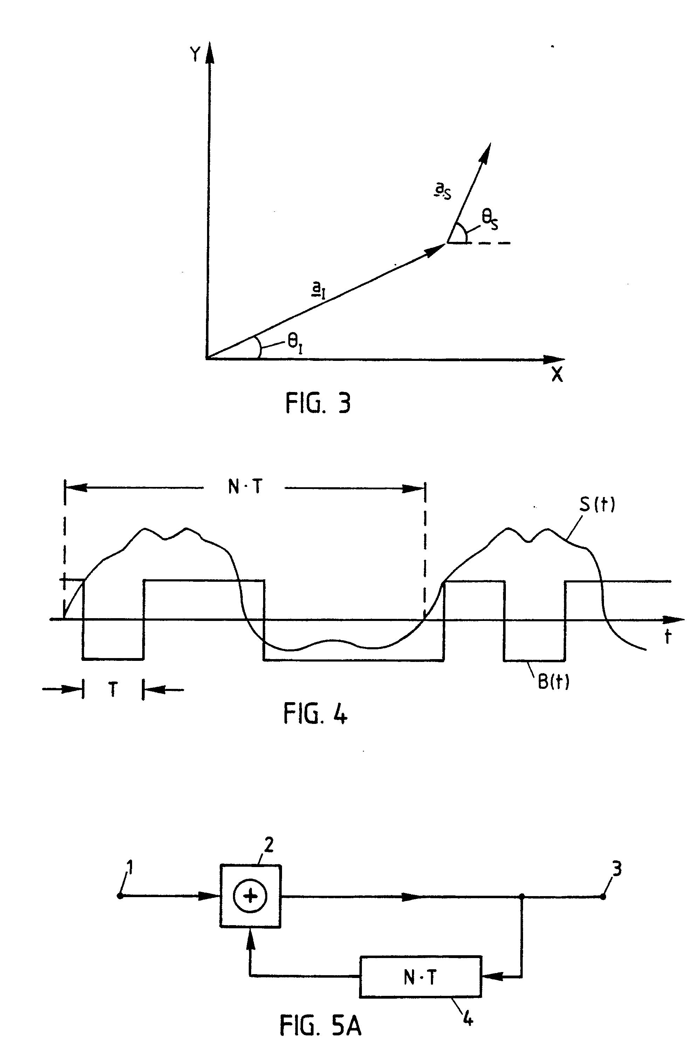

Dazu wird das DPSK-Signal mit seiner Trägerfrequenz $f_o$, wie in Fig. 2 wiedergegeben, nicht zwischen zwei benachbarte Harmonische, sondern genau auf eine Harmonische der Grundfrequenz $f_G$ gelegt und die Symboldauer T so gewählt, dass sie der Periodendauer der Grundfrequenz $f_G$ gleich ist.

Unter den genannten Bedingungen liegen die Harmonischen Störfrequenzen auf beiden Seiten von $f_o$ wiederum in den Nullstellen der spektralen Leistungsverteilung, während diejenige Harmonische, die gleich der Trägerfrequenz $f_o$ ist, mitten im Hauptbereich des Signalspektrums plaziert ist und daher auf andere Weise eliminiert werden muss.

Gemäss Fig. 3 lässt sich das empfangene Signal r(t) als Vektorsumme eines Nutzsignalvektors $\underline{a}_s$ und eines Störsignalvektors $\underline{a}_l$ in der komplexen Ebene darstellen

$$(2) \quad \underline{r}(t) = \underline{a}_s(t) + \underline{a}_l(t)$$

Der Uebergang zum Imaginärteil ergibt:

$$(3) \quad r(t) = a_s \sin(\omega_o t + \theta_s) + a_l \sin(\omega_o t + \theta_l)$$

mit den Phasenkonstanten $\theta_s$, $\theta_l$ und den Amplituden $a_s = \pm 1$ (entsprechend Phasensprüngen von $180°$) und $a_l = \text{const.}$, sowie $\omega_o = 2\pi f_o$.

Um das empfangene Signal r(t) in geeigneter Weise zu verarbeiten, verwendet man einen Vektor-Empfänger, der die Differenz zwischen den Vektoren zum Zeitpunkt kT und zum Zeitpunkt (k-1)T bildet:

$$(4) \quad \underline{r}(kT) - \underline{r}((k-1)T)$$

Da die bei $f_o$ liegende harmonische Störfrequenz mit der Symboldauer T periodisch ist, fällt sie bei dieser Differenzbildung stets heraus. Uebrig bleibt die Differenz zwischen zwei benachbarten Nutzsignalvektoren, die, je nach dem, ob sich die Phase ändert oder nicht, 0 oder $2a_s$ betragen kann.

Auf diese Weise wird die in der Phasendifferenz zwischen zwei benachbarten Zuständen enthaltene Information detektiert und zugleich der in der Mitte des Nutzsignalspektrums liegende Störer eliminiert.

Von diesem speziellen Beispiel der erfindungsgemässen Datenübertragung, welches eine Verdoppelung der Datenrate (durch Halbierung der Symboldauer T) ermöglicht, ausgehend, gelangt man unter Beibehaltung des Prinzips der Differenzbildung zu einer Verallgemeinerung, die zu beliebigen Datenraten führt.

Das Spektrum der harmonischen Störfrequenzen einer gemeinsamen Grundfrequenz $f_G$ lässt sich darstellen als periodische (nicht-sinusförmige) Schwingung mit der Periodendauer $1/f_G$.

Wird nun die Symboldauer T so gewählt, dass die Periodendauer $1/f_G$ des Störsignals S(t) ein ganzzahliges Vielfaches der Symboldauer T im Basisbandsignal B(t) beträgt (Fig. 4):

$$(5) \quad 1/f_G = N \cdot T \quad (N = 1, 2, 3, \ldots),$$

kann das gesamte Störspektrum dadurch eliminiert werden, dass jeweils empfängerseitig die Differenz zwischen Symbolen gebildet wird, die um N Symbolintervalle auseinanderliegen, da das Störsignal S(t) nach der Zeit $N \cdot T$ wiederum denselben Wert annimmt und somit bei der Differenzbildung herausfällt.

Die Differenzbildung zwischen um N Intervalle voneinander entfernten Symbolen muss bei der senderseitigen Datenverarbeitung berücksichtigt werden. Das Blockschaltbild eines senderseitigen Kodierers, der diese Datenmanipulation vornimmt, ist in Fig. 5A dargestellt.

Die zu übertragene Folge von Daten gelangt über einen Kodierereingang 1 auf den ersten Eingang eines Addierers 2. Der Ausgang des Addierers 2 ist mit dem Kodiererausgang 3 verbunden. Die aus dem Addierer 2 kommenden Daten werden gleichzeitig einem Verzögerungsglied 4, z.B. einem Schieberegister, zugeführt und von dort auf einen zweiten Eingang des Addierers 2 gegeben und mod 2 zu der am ersten Eingang anstehenden Datenfolge addiert. Im Kodierer werden demnach jeweils zwei um N Intervalle entfernte Symbole addiert, bevor sie zur Phasentastung verwendet werden.

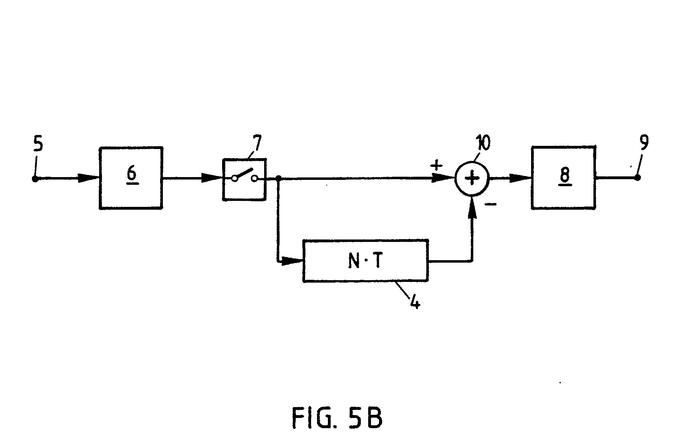

Auf der Empfängerseite (Fig. 5B) gelangt das demodulierte Basisbandsignal auf einen Detektoreingang 5, von dort auf einen Integrierer 6, der das Integral

$$(6) \quad \int_{(k-1)T}^{kT} B_r(t)dt \quad (k = 1, 2, 3, \ldots)$$

des empfangenen Basisbandsignals $B_r(t)$ bildet. Ueber einen mit der Abtastrate 1/T arbeitenden Abtaster 7 erreicht das Signal den positiven Eingang eines Addierers 10, wird zugleich in einem Verzögerungsglied 4 um $N \cdot T$ verzögert und dem negativen Eingang des Addierers 10 zugeführt.

Im Addierer 10 wird also die entscheidende Differenzbildung vollzogen, die zur Eliminierung des

EP 0 254 846 B1

Störsignals S(t) führt und die Addition aus dem sendeseitigen Kodierer (Fig. 5A) rückgängig macht.

Dem Addierer 10 ist ein sogenannter Slicer 8 nachgeschaltet, der eine ( + 1/-1)-Entscheidung fällt, je nach dem, ob das aus dem Addierer 10 kommende Signal grösser oder kleiner als Null ist. Die detektierte Datenfolge kann schliesslich am Detektorausgang 9 abgenommen werden.

Alle für das erfindungsgemässe Uebertragungsverfahren sonst nach benötigten Funktionsblöcke wie Oszillatoren, Phasenmodulatoren und -demodulatoren können von herkömmlicher Art sein und werden hier deshalb nicht näher beschrieben.

Insgesamt steht mit der Erfindung ein Uebertragungsverfahren zur Verfügung, das gerade bei der Kommunikation über Verteilnetze mit ihren harmonischen Störungen eine störungssichere Datenübertragung mit hoher Datenrate ermöglicht.

**Patentansprüche**

1. Verfahren zur Uebertragung von Daten, die als Folge von Symbolen mit einer bestimmten Symboldauer (T) vorliegen, bei welchem Verfahren die Symbole einer Trägerfrequenz ($f_o$) mittels Phasenumtastung aufmoduliert, übertragen und empfängerseitig detektiert werden und die Phasenumtastung differentiell erfolgt (DPSK = Differential Phase Shift Keying), dadurch gekennzeichnet, dass zur Unterdrückung von Störungen, die in einer harmonischen Beziehung zu einer Grundfrequenz ($f_G$) stehen,

   a) als Trägerfrequenz ($f_o$) eine Frequenz verwendet wird, welche gleich einer Harmonischen der Grundfrequenz ($f_G$) ist,

   b) die Symboldauer so gewählt wird, dass die Periode der Grundfrequenz ($f_G$) das N-fache der Symboldauer (T) beträgt und

   c) empfängerseitig die Differenz von jeweils zwei, um N Symbolintervalle auseinanderliegenden Symbolen gebildet wird.

2. Verfahren nach Anspruch 1, dadurch gekennzeichnet, dass senderseitig vor der Modulation die Daten in der Weise kodiert werden, dass jeweils zwei um N Symbolintervalle auseinanderliegende Symbole addiert werden.

3. Verfahren nach Anspruch 2, dadurch gekennzeichnet, dass empfängerseitig das demodulierte Signal vor der Differenzbildung jeweils über den Zeitraum einer Symboldauer (T) integriert wird.

4. Verfahren nach Anspruch 3, dadurch gekennzeichnet, dass empfängerseitig nach der Differenzbildung das Signal einem Slicer (8) zugeführt wird.

5. Verfahren nach Anspruch 1, dadurch gekennzeichnet, dass N = 1 gewählt und entsprechend empfängerseitig jeweils die Differenz benachbarter Symbole gebildet wird.

6. Vorrichtung zur senderseitigen Durchführung des Verfahrens nach Anspruch 1, wobei

   a) erste Mittel zum Erzeugen von Daten als Folge von Symbolen mit einer bestimmten Symboldauer (T),

   b) zweite Mittel zum Kodieren der Daten gemäss einer differentiellen Phasenumtastung (DPSK = Differential Phase Shift Keying), und

   c) dritte Mittel, um die Symbole einer Trägerfrequenz ($f_o$) mittels Phasenumtastung aufzumodulieren, vorgesehen sind, dadurch gekennzeichnet, dass zum Ermöglichen der Unterdrückung von Störungen, die in einer harmonischen Beziehung zu einer Grundfrequenz ($f_G$) stehen,

   d) die ersten Mittel die Symboldauer so vorgeben, dass die Periode der Grundfrequenz ($f_G$) das N-fache der Symboldauer (T) beträgt, und

   e) die dritten Mittel als Trägerfrequenz ($f_o$) eine Frequenz verwenden, welche gleich einer Harmonischen der Grundfrequenz ($f_G$) ist.

7. Vorrichtung zur empfängerseitigen Durchführung des Verfahrens nach Anspruch 1, wobei erste Mittel zum Demodulieren und Detektieren der übertragenen Daten, welche als Folge von Symbolen mit einer bestimmten Symboldauer (T) einer bestimmten Trägerschwingung mittels Phasenumtastung aufmoduliert sind, vorgesehen sind, dadurch gekennzeichnet, dass die genannten Mittel bei der Dekodierung zwecks Unterdrückung von Störungen, die in einer harmonischen Beziehung zu einer Grundfrequenz ($f_G$) stehen, die Differenz von jeweils zwei, um N Symbolintervalle auseinanderliegenden Symbolen bilden.

5

## Claims

1. Method for transmitting data which are present as a sequence of symbols having a particular symbol duration (T), in which method the symbols are modulated by means of phase shift keying onto a carrier frequency ($f_o$), are transmitted and are detected on the receiver side, and the phase shift keying is carried out differentially (DPSK = Differential Phase Shift Keying), characterised in that, for the suppression of disturbances which have a harmonic relation to a fundamental frequency ($f_G$),

   a) as the carrier frequency ($f_o$), a frequency is used which is equal to a harmonic of the fundamental frequency

   b) the symbol duration is selected in such a manner that the period of the fundamental frequency ($f_G$) is N-times the symbol duration (T), and

   c) on the receiver side, the difference of two symbols is formed, which are in each case separated by N symbol intervals.

2. Method according to Claim 1, characterised in that, before modulation, the data on the transmitter side are coded in such a manner that in each case two symbols which are separated by N symbol intervals are added.

3. Method according to Claim 2, characterised in that the demodulated signal, before the difference is formed, is in each case integrated over the period of one symbol duration (T) on the receiver side.

4. Method according to Claim 3, characterised in that, after the difference has been formed, the signal is fed to a slicer (8) on the receiver side.

5. Method according to Claim 1, characterised in that N = 1 is selected and, correspondingly, in each case the difference of adjacent symbols is formed on the receiver side.

6. Device for carrying out the method according to Claim 1 on the transmitter side, in which

   a) first means for generating data as a sequence of symbols having a particular symbol duration (T),

   b) second means for encoding the data according to a differential phase shift keying (DPSK = Differential Phase Shift Keying), and

   c) third means in order to modulate the symbols of a carrier frequency ($f_o$) by means of phase shift keying are provided, characterised in that, to permit the suppression of disturbances which have a harmonic relation to a fundamental frequency ($f_G$),

   d) the first means predetermine the symbol duration in such a manner that the period of the fundamental frequency ($f_G$) is N-times the symbol duration (T), and

   e) the third means use as carrier frequency ($f_o$) a frequency which is equal to a harmonic of the fundamental frequency ($f_G$).

7. Device for carrying out the method according to Claim 1 on the receiver side, in which first means for demodulating and detecting the transmitted data, which are modulated as a sequence of symbols having a particular symbol duration (T) of a particular carrier oscillation by means of phase shift keying, are provided, characterised in that, during decoding, for the purpose of suppressing disturbances which have a harmonic relation to a fundamental frequency ($f_G$), the said means form the difference between, in each case, two symbols lying N symbol intervals apart.

## Revendications

1. Procédé de transmission de données, qui sont présentes sous la forme d'une séquence de symboles d'une durée de symbole (T) déterminée, suivant lequel les symboles sont modulés sur une fréquence de porteuse ($f_o$) par modulation de phase, sont transmis et sont détectés du côté récepteur et la modulation de phase est différentielle (MDPD = Modulation De Phase Différentielle), caractérisé en ce que, pour supprimer des perturbations présentant une relation harmonique avec une fréquence fondamentale ($f_G$) :

   a) on utilise comme fréquence de porteuse ($f_o$) une fréquence qui est égale à un harmonique de la fréquence fondamentale ($f_G$),

   b) on choisit la durée de symbole telle que la période de la fréquence fondamentale ($f_G$) s'élève à N fois la durée de symbole (T), et

c) du côté récepteur, on forme chaque fois la différence entre deux symboles séparés l'un de l'autre de N intervalles de symboles.

2. Procédé suivant la revendication 1, caractérisé en ce que, du côté émetteur, les données sont codées avant la modulation d'une manière telle que deux symboles séparés l'un de l'autre de N intervalles de symboles sont chaque fois additionnés.

3. Procédé suivant la revendication 2, caractérisé en ce que, du côté récepteur, avant la formation de différence, le signal démodulé est chaque fois intégré sur une durée de symbole (T).

4. Procédé suivant la revendication 3, caractérisé en ce que, du côté récepteur, le signal est appliqué à un filtre limiteur (8) après la formation de différence.

5. Procédé suivant la revendication 1, caractérisé en ce qu'on choisit N = 1 et, du côté récepteur, on forme chaque fois de manière correspondante la différence entre des symboles voisins.

6. Dispositif pour l'exécution du procédé de la revendication 1 du côté émetteur, dans lequel sont prévus :
   a) des premiers moyens pour produire des données sous forme d'une séquence de symboles à durée de symbole (T) déterminée,
   b) des deuxièmes moyens pour coder les données selon une modulation de phase différentielle (MDPD), et
   c) des troisièmes moyens pour moduler les symboles par modulation de phase sur une fréquence de porteuse ($f_o$), caractérisé en ce que, pour permettre la suppression de perturbations présentant une relation harmonique avec la fréquence fondamentale ($f_G$),
   d) les premiers moyens définissent la durée de symbole d'une manière telle que la période de la fréquence fondamentale ($f_G$) s'élève à N fois la durée de symbole (T), et
   e) les troisièmes moyens utilisent comme fréquence de porteuse ($f_o$) une fréquence qui est égale à un harnonique de la fréquence fondamentale ($f_G$).

7. Dispositif pour l'exécution du procédé de la revendication 1 du côté récepteur, dans lequel sont prévus des premiers moyens pour démoduler et détecter les données transmises, qui sont modulées par modulation de phase, à l'état de séquence de symboles d'une durée de symbole (T) déterminée sur une oscillation de porteuse déterminée, caractérisé en ce que, lors du décodage, lesdits moyens forment chaque fois, en vue de supprimer des perturbations présentant une relation harmonique avec une fréquence fondamentale ($f_G$), la différence entre deux symboles séparés l'un de l'autre de N intervalles de symboles.

P(f)

f_0

FIG. 1A

$f_G(n-2)$  $f_G(n-1)$  $f_G n$  $f_G(n+1)$  $f_G(n+2)$  $f_G(n+3)$  $f_G(n+4)$

P(f)

f_0

FIG. 1B

P(f)

f_0

FIG. 2

FIG. 3

FIG. 4

FIG. 5A

— not used —

FIG. 5B